(19) Europäisches Patentamt
European Patent Office
Office européen des brevets

(11) **EP 1 286 049 B1**

(12) **EUROPÄISCHE PATENTSCHRIFT**

(45) Veröffentlichungstag und Bekanntmachung des Hinweises auf die Patenterteilung:
**29.03.2017   Patentblatt 2017/13**

(51) Int Cl.:
***F03D 7/02*** *(2006.01)*

(21) Anmeldenummer: **02018223.4**

(22) Anmeldetag: **20.08.2002**

(54) **Windkraftanlage**

Wind turbine

Eolienne

(84) Benannte Vertragsstaaten:
**DE GB IE NL**

(30) Priorität: **22.08.2001   DE 10141098**

(43) Veröffentlichungstag der Anmeldung:
**26.02.2003   Patentblatt 2003/09**

(73) Patentinhaber: **GENERAL ELECTRIC COMPANY**
**Schenectady, NY 12345 (US)**

(72) Erfinder: **Weitkamp, Roland**
**49191 Belm (DE)**

(74) Vertreter: **Zimmermann & Partner**
**Patentanwälte mbB**
**Postfach 330 920**
**80069 München (DE)**

(56) Entgegenhaltungen:
**EP-A- 0 709 571     WO-A-00/61942**
**WO-A-83/01490     US-A- 4 527 072**

## Beschreibung

Die Erfindung betrifft eine Windkraftanlage, insbesondere Horizontalachs-Windkraftanlage mit einem um eine vorzugsweise etwa horizontal verlaufende Rotorachse drehbaren und mindestens ein sich quer, vorzugsweise etwa senkrecht zur Rotorachse erstreckendes Rotorblatt aufweisenden Rotor, einer Verstelleinrichtung zum Verstellen des mindestens einen, vorzugsweise jedes Rotorblattes, wobei durch das Verstellen das bei Windlast bezüglich der Rotorachse erzeugte Drehmoment veränderbar ist, und einer Stabilisierungsanordnung mit der der Rotor in mindestens einer vorgegebenen, insbesondere lastarmen Drehstellung (Parkposition) stabilisierbar ist.

Herkömmliche Horizontalachs-Windkraftanlagen bestehen aus einem Turm, einem auf dem Turm montierten, mindestens ein Rotorblatt aufweisenden Rotor und einem Maschinenhaus zur Aufnahme einer Rotorlagerung und eines Generators, der ggf. über ein ebenfalls in dem Maschinenhaus aufgenommenes Getriebe von dem Rotor betrieben werden kann.

Bei hohen Windgeschwindigkeiten muß üblicherweise die Rotordrehzahl und die Leistung des von dem Rotor angetriebenen Generators begrenzt werden, um eine Überlastung der mechanischen und elektrischen Bauteile der Windkraftanlage zu verhindern. Dazu weisen herkömmliche Windkraftanlagen häufig eine Verstelleinrichtung zum Verstellen der Rotorblätter auf, wobei durch diese Verstellung der Rotorblätter das bei Windlast bezüglich der Rotorachse erzeugte Drehmoment verändert wird. Die Verstellung der Rotorblätter erfolgt in der Regel so, daß die Rotorblätter um einen in Bezug auf die Längsachse azimutalen Verstellwinkel verdreht werden, um so den Anströmwinkel zu verändern, was wiederum eine Veränderung des bei Windlast bezüglich der Rotorachse erzeugten Drehmomentes zur Folge hat. Dabei wird dieses Drehmoment durch eine Verminderung des Anströmwinkels verringert. Neben der Verstellung des Rotorblattes durch Verdrehen um einen azimutalen Verstellwinkel sind auch Verstellungen mit Hilfe von Spoilem, (Wölb-)Klappen, drehbaren Blattspitzen (Tips) oder ähnlichem bekannt, mit denen ebenfalls das bezüglich der Rotorachse erzeugte Drehmoment verändert werden kann. Mit der Bezeichnung "Rotorblattverstellung" im Sinne dieser Schrift sind derartige Lösungen mit eingeschlossen.

Wenn die Windkraftanlage vom Netz genommen wird (z.B. bei Sturm), ist es in der Regel gewünscht, daß der Rotor in einem möglichst lastarmen Zustand geparkt wird. Dazu werden bei bekannten Windkraftanlagen Stabilisierungsanordnungen eingesetzt mit denen der Rotor in der Parkposition festgebremst wird. Für Windkraftanlagen mit zwei Rotorblättem ist das Festbremsen des Rotors in der lastarmen horizontalen Stellung seit langem üblich.

In der EP 0 709 571 A2 werden für einen Zweiblattrotor zwei lastarme Parkpositionen vorgeschlagen. In der ersten Parkposition wird durch Verdrehen von einem. Teil eines Rotorblattes des in horizontaler Stellung festgebremsten Rotors eine Art Windfahnenwirkung des anderen, in Betriebsstellung verbleibenden Rotorblattes benutzt, um die Maschinengondel auf dem Turm der Windkraftanlage bei freigegebenem Azimutsystem in eine 90°-Stellung zum Wind zu verdrehen. In der zweiten Parkposition sollen bei in horizontaler Stellung festgebremstem Rotor die Verstellachsen der Rotorblätter freigegeben werden, damit sich die Rotorblätter selbstständig in eine lastarme Ausrichtung orientieren.

Beide Vorschläge führen in der Praxis durch die erheblichen Massenträgheiten bei Großanlagen (Rotorblattgewicht: 5-15 t, Turmkopf-(Gondel-)Masse 80-400 t) und den vorhandenen Turbulenzen zu sehr hohen dynamischen Belastungen. Dabei besteht durch das Festbremsen des Rotors generell die Gefahr, daß hohe Drehmomente auftreten, die insbesondere für Getriebemaschinen sehr schädlich sind.

Dieses Problem läßt sich durch eine Rotorbremse auf der langsamen Getriebewelle oder durch eine (formschlüssige) Rotorarretierung auf der langsamen Welle entschärfen. Beide Lösungen sind jedoch relativ kostspielig, im ersten Fall aufgrund der hohen erforderlichen Bremskräfte, im zweiten Fall aufgrund der Ausmaße der erforderlichen Arretierungselemente sowie der Forderung, daß bei Netzausfall der Rotor positioniert und die Arretierung automatisch eingelegt werden muß.

Bei Dreiblattrotoren ist es neben dem Festbremsen der Rotoren seit längerem üblich, die Rotoren mit aus dem Wind gedrehten Rotorblättern (Fahnenstellung) trudeln zu lassen, da sich so das niedrigste Lastniveau ergibt. Dabei bedeutet Trudeln, daß die Windkraftanlage vom Netz abgekoppelt ist, der an den Generator gekoppelte Rotor im übrigen aber ungebremst dreht. Dennoch ergibt dieser Zustand den für viele Komponenten (z.B. Rotorblatt und Turm) dimensionierenden Lastfall.

Angesichts der vorstehend erläuterten Probleme im Stand der Technik liegt der Erfindung die Aufgabe zugrunde, das Lastniveau einer Windkraftanlage im Parkzustand zu senken.

Erfindungsgemäß wird diese Aufgabe durch eine Weiterbildung der bekannten Windkraftanlage gelöst, die im wesentlichen dadurch gekennzeichnet ist, daß die Stabilisierungsanordnung eine an die Verstelleinrichtung koppelbare Kopplungs-, insbesondere Regeleinrichtung aufweist, mit der bei Abweichung von der vorgegebenen Drehstellung, inbesondere bei einer Drehbewegung des Rotors aus der vorgegebenen Drehstellung eine Verstellung des mindestens einen Rotorblattes zur Erzeugung eines dieser Abweichung bzw. Drehbewegung entgegenwirkenden Drehmomentes veranlaßt werden kann.

Diese Erfindung geht auf die Erkenntnis zurück, daß Belastungen im Parkzustand reduziert werden können, wenn der Rotor in einer lastarmen Position (Drehstellung) stabilisiert werden kann, ohne dabei eine Rotorbremse oder Rotorarretierung einzusetzen. Dieses läßt sich verblüffend einfach realisieren, indem die beim Betrieb herkömmlicher Windkraftanlagen zur Anpassung des Betriebs an die vorherrschenden Windbedingungen ohnehin erforderliche Verstelleinrichtung auch zum Stabilisieren des Rotors in einer vorgegebenen Drehstellung bzw. Parkposition eingesetzt wird, wenn nur eine entsprechende Kopplungs- bzw. Regeleinrichtung vorgesehen wird, mit der bei einer Drehbewegung des Rotors aus der vorgegebenen Drehstellung eine Verstellung des bzw. der Rotorblätter gesorgt wird, welche dieser Drehbewegung entgegenwirkt. Daher kann mit der erfindungsgemäßen Windkraftanlage unter Einsatz einer konstruktiv einfach verwirklichbaren Kopplungs- bzw. Regeleinrichtung eine Rotorstabilisierung unter gleichzeitiger Vermeidung hoher dynamischer Belastungen erreicht werden. Bei der erfindungsgemäßen Windkraftanlage kann durch eine aktive Regelung der Rotorblattverstellung in der Parkposition erreicht werden, daß der Rotor in einer lastarmen Position nicht festgebremst wird, sondern ohne Verlassen dieser Parkposition weiter gleichermaßen "Trudeln" kann. Bei diesem "Trudeln" wird das Rotorblatt so verstellt, insbesondere indem um die übliche Fahnenstellung (Blattwinkel ca. 90°) herumgeregelt wird, daß ein turbulenzbedingtes Auswandern des Rotors aus der Parkposition umgehend durch einen Regeleingriff korrigiert wird.

Wie vorstehend bereits angesprochen, läßt sich die Stabilisierung besonders einfach erreichen, wenn das mindestens eine Rotorblatt mit der Verstelleinrichtung in herkömmlicher Weise zumindest teilweise um eine quer zur Rotorachse, vorzugsweise parallel zur Längsachse dieses Rotorblattes verlaufende Drehachse verdrehbar ist. In diesem Fall muß ggf. der Verdrehbereich der Rotorblätter herkömmlicher Windkraftanlagen so erweitert werden, daß damit auch ein bezüglich der üblichen Drehrichtung des Rotors entgegengesetztes Drehmoment bewirkt werden kann.

Zusätzlich oder alternativ zur Verstellung des bzw. der Rotorblätter durch Verdrehen kann dem Rotorblatt auch mindestens eine aerodynamische Hilfseinrichtung, wie etwa eine Wölbklappe, eine Störklappe, ein Spoiler und/oder eine drehbare Blattspitze zugeordnet sein, wobei die Verstellung in diesem Fall zusätzlich oder alternativ durch eine Verstellung dieser aerodynamischen Hilfseinrichtung bewirkt wird.

Im Fall des Ein- oder Zweiblattrotors, bei dem die Erfindung besonders vorteilhaft ist, wird der Rotor zweckmäßigerweise in der lastarmen horizontalen Drehstellung stabilisiert, in der das Rotorblatt bzw. die Rotorblätter etwa horizontal ausgerichtet ist (sind). Wie vorstehend bereits erwähnt muß diese Stabilisierung nicht notwendigerweise durch Verdrehen des gesamten Rotorblattes erfolgen. Es sind sowohl in der Windenergie als auch insbesondere aus der Luftfahrt viele Varianten von Spoilern, (Wölb-)Klappen, drehbaren Blattspitzen (Tips) oder ähnlichem bekannt, die die gleiche Wirkung zeigen. Vorstehend wurde bereits erläutert, daß es zur Stabilisierung der Rotorposition unter Benutzung der Verstelleinrichtung im allgemeinen erforderlich ist, sonst in der Windenergie für Maschinen mit Blattverstellung (Pitch-Anlagen) nicht übliche Rotorblattwinkel anzufahren, weil je nach zufälliger Windturbulenz auch ein Rückwärtsdrehen des Rotors erforderlich werden kann (Blattwinkel > 90°).

Weiterhin ist es mit begrenztem Zusatzaufwand möglich, die Stabilisierungseinrichtung so auszuführen, daß sie auch als primäres oder sekundäres Bremssystem zum Abbremsen des Rotors aus Nenn- oder Überdrehzahl benutzt werden kann.

Realisiert werden kann eine derartige Regelung auf elektromechanischem Weg, indem ein Sensor die aktuelle Rotorposition erfaßt, ein diese Rotorposition darstellendes Sensorsignal an eine Signalverarbeitungsanordnung angelegt wird, in welcher der aktuelle Positionswert mit einem Positionssollwert verglichen und aus der Differenz ein Sollwert für die Blattverstellung bzw. eine Blattwinkelvorgabe errechnet wird. Dieser Sollwert für die Blattverstellung kann dann ansprechend auf ein von der Signalverarbeitungsanordnung abgegebenes Regelsignal eingestellt werden. Dadurch wird der Rotor zurück in die Parkposition bzw. die horizontale Parkposition gedreht. Im einfachsten Fall ist der Regelalgorithmus nach Art eines einfachen Proportionalreglers der Form

$$\Delta(\text{Blattwinkel}) = \text{Verstärkungskonstante } k \cdot \Delta(\text{Rotorposition})$$

gebildet.

Verbesserte Regelergebnisse werden durch höherentwickelte Algorithmen (z.B. PI oder PID, adaptive oder Fuzzy-Regler) erreicht. Schon beim einfachen PID-Regler wird praktisch auch die aktuelle Rotordrehzahl zur Positionsregelung ausgewertet.

Aus Simulationsrechnungen ist bekannt, daß abhängig von der Schräganströmung des Windes relativ zur Rotorachse unterschiedliche Verstärkungskonstanten im Regler vorteilhaft sind. Bei einer sehr großen Schräganströmung (< 50°) muß der Rotor mit Hilfe der Windnachführung der Winddrehung nachgeführt werden.

In diesem Zusammenhang hat es sich als zweckmäßig erwiesen, wenn mindestens ein Regelalgorithmus der Regeleinrichtung der erfindungsgemäßen Windkraftanlage und/oder dessen Verstärkung(en) in Abhängigkeit von der beispielsweise mittels Windfahnensignal ermittelten Windrichtung veränderbar ist.

Zur Gewährleistung der Betriebssicherheit einer erfindungsgemäßen Windkraftanlage bei einem beispielsweise infolge eines Sturms auftretenden Netzausfall kann die erfindungsgemäße Windkraftanlage eine eigene Energieversorgungseinrichtung aufweisen. Mit dieser eigenen Energieversorgungseinrichtung kann eine Energiepufferung sowohl der Signalverarbeitungsanordnung als auch der Blattverstelleinrichtung (sowie eventuell der Windnachführung) erfolgen. Die eigene Energieversorgungseinrichtung einer erfindungsgemäßen Windkraftanlage kann beispielsweise durch mindestens einen Akkumulator, Kondensator (Ultra-Capacitor) und/oder ein Notstromaggregat, insbesondere Dieselaggregat, verwirklicht werden. Im Hinblick auf die Bereitstellung einer kostengünstigen Energieversorgungseinrichtung hat es sich als besonders vorteilhaft erwiesen, wenn die Energieversorgungseinrichtung eine vorzugsweise an einer Maschinengondel der Windkraftanlage montierte kleine Hilfs-Windkraftanlage aufweist. Mehrere kleinere, vorzugsweise an der Maschinengondel montierte Hilfs-Windkraftanlagen erhöhen die Systemzuverlässigkeit durch Redundanz.

Als Hilfs-Windkraftanlage wird zweckmäßigerweise ein System im Leistungsbereich zwischen 5 und 100 kW benutzt. Bei einer besonders bevorzugten Ausführung wird die mindestens eine Hilfs-Windkraftanlage für eine unüblich hohe Nenngeschwindigkeit oberhalb von 25 m/s ausgelegt, da in der Regel nur bei solch hohen Windgeschwindigkeiten eine Notstromversorgung erforderlich ist und somit die Rotorfläche der Hilfs-Windkraftanlage begrenzt werden kann. Ferner hat es sich als zweckmäßig erwiesen wenn die mindestens eine Hilfs-Windkraftanlage als Vertikalachsmaschine ausgeführt ist, weil dann nur der auf der senkrechten Welle gelagerte Rotor auf dem Maschinenhaus der Haupt-Windkraftanlage installiert werden muß und die Welle durch das Dach der Maschine geführt werden kann, so daß der komplette Maschinensatz innerhalb der Maschinengondel der Windkraftanlage untergebracht werden kann, wo er insbesondere für Wartungszwecke leicht zugänglich ist.

Unter Vermeidung der Bereitstellung einer eigenen Energieversorgungseinrichtung kann bei einer erfindungsgemäßen Windkraftanlage die Stabilisierung des Rotors in der Parkposition dadurch zuverlässig sichergestellt werden, daß die der Drehbewegung des Rotors entgegenwirkende Verstellung des mindestens einen Rotorblattes auf rein mechanischem Weg realisiert wird. Dazu weist die Kopplungseinrichtung der erfindungsgemäßen Windkraftanlage vorteilhafterweise mindestens ein Kopplungssystem auf, mit dem über eine lösbare, direkte mechanische Kopplung bei einer Drehbewegung des Rotors eine Verstellung des mindestens einen, vorzugsweise jedes Rotorblattes bewirkt wird. Dabei kann das Kopplungssystem nach Art einer an sich bekannten Blattverstellung mit einer vorzugsweise zumindest abschnittweise etwa parallel zur Rotorachse verlaufenden Torsionswelle und/oder Schubstange gebildet sein, die innerhalb einer hohlgebohrten Hauptwelle und/oder eines Achszapfens verläuft, und auf vorzugsweise innerhalb einer Rotornabe angeordnete Verstellmittel wirkt, mit denen bei einer Drehbewegung des Rotors eine Verstellung des mindestens einen Rotorblattes bewirkt wird. Wie vorstehend bereits erläutert ist ein derartiges System für die Blattverstellung bereits bekannt. Allerdings werden diese Systeme derzeit nur zum Anhalten des Rotors in einer beliebigen Rotorposition, also als aerodynamische Rotorbremse verwendet. Gegenstand der gerade beschriebenen Ausführungsform der Erfindung ist aber nicht die Aktivierung eines mechanischen Blattverstellsystems zu Bremszwecken, sondern die positionsgeregelte Aktivierung eines konstruktiv ähnlich aufgebauten Systems zur Stabilisierung des Rotors in einer lastarm (bei Zwei- oder Einblattrotoren horizontalen) Position. Bei einem derartigen System ist die Stabilisierung des Rotors in der Parkposition von einer externen Energiezufuhr unabhängig. Eine externe Energiezufuhr wird allenfalls zur Betätigung aktiver Stellmittel benötigt, mit denen die anfängliche Einstellung der lastarmen Parkposition erfolgt. Ist der Rotor einmal in der richtigen Parkposition zum Stillstand gekommen und das mechanische Kopplungssystem aktiviert (beispielsweise durch Aktivieren einer lösbaren mechanischen Kopplung zwischen Rotorposition und Blattverstellung bzw. Blattwinkel) so benötigt das System keine weitere Energiezufuhr.

Das Einstellen der lastarmen Parkposition kann durch folgende Strategien erfolgen:

a) Verstellung des Blattwinkels in die Fahnenstellung (durch zeitlich begrenzte Aktivierung der Stabilisierungsanordnung einer erfindungsgemäßen Windkraftanlage) mit nachfolgender erneuter, dann dauerhafter Aktivierung des Systems, sobald sich der Rotor in der gewünschten Parkposition befindet.

b) Erfassung der aktuellen Rotorposition und des aktuellen Zustands der Blattverstellung bzw. des Blattwinkels mit Hilfe einer Auswerteeinheit (vorzugsweise einer Datenverarbeitungsanlage) und Aktivierung der Stabilisierungseinrichtung derart, daß der Rotor in der gewünschten Parkposition mit Blättern in Fahnenstellung zum Stillstand kommt.

c) Aktivierung der Stabilisierungsanordnung der erfindungsgemäßen Windkraftanlage in einer beliebigen Rotorposition und Anpassung des Rotorblattwinkels durch ein zweites, hierzu redundantes Rotorblatt-Verstellsystem in der Weise, daß der Rotor in die gewünschte Parkposition dreht.

Wie vorstehend bereits erläutert, ist es mit geringem Zusatzaufwand möglich, die Stabilisierungsanordnung der erfindungsgemäßen Windkraftanlage so auszuführen, daß sie gleichzeitig auch als primäres oder sekundäres (redundantes) Bremssystem zum Stoppen des rotierenden Rotors genutzt werden kann. Hierzu wird der Verstärkungsfaktor des Proportionalreglers für die Positionsregelung zweckmäßigerweise deutlich größer gewählt als für den Bremsvorgang, was prinzipiell entweder über schaltbare Verbindungen realisiert werden kann oder durch "weiches" kontinuierliches Aktivieren der Positionsregelung, z.B. durch gesteuerte Friktions-, Fluid- oder Magnetbremsen, Visko-Kupplungen oder auch aktiv durch Elektro- oder Hydraulikmotoren.

Eine bevorzugte Ausführungsform der Erfindung läßt sich realisieren, in dem die im Stand der Technik seit langem bekannte Anordnung des Blattverstellsystems über eine durch die Rotorlagerung geführte Torsionswelle mit einem ersten zwischen der Torsionswelle und dem Rotor wirkenden Brems- oder Arretiersystem und einem zweiten zwischen der Torsionswelle und einer nichtrotierenden Gondel der Windkraftanlage wirkenden Brems- oder Arretiersystem aufgenommen wird. Die Umsetzung einer Relativbewegung zwischen Torsionswelle und Rotor in eine Blattverstellbewegung kann hierbei über eine Vielzahl von Verstellmitteln erfolgen, z.B. über einen Kegeltrieb, dessen Abtriebsseite direkt ein übliches Antriebsritzel treibt, welches direkt auf einen verzahnten blattseitigen Lagerring einer Drehverbindung zum Rotorblatt wirkt oder auch über den Umweg eines Riementriebes. Dabei muß die Torsionswelle nicht notwendigerweise koaxial zur Rotorachse positioniert sein. Insbesondere für den Fall einer von Innen begehbaren Rotorwelle (Rotorlagerung) ist es vorteilhaft, die Torsionswelle exzentrisch zur Rotorachse zu positionieren. Im Fall einer Getriebemaschine ist es möglich, die Torsionswelle koaxial zur Rotorwelle durch das Hauptgetriebe zu führen, und sie dann vor dem Getriebe (innerhalb der Rotorwelle) über ein Zwischengetriebe (z.B. Riementrieb oder Stirnradgetriebe) zur Seite zu führen.

Wichtig für die Funktionalität des vorstehend erläuterten Blattverstellsystems mit einer durch die Rotorlagerung geführten Torsionswelle ist die Bereitstellung von zwei Bremssystemen, von denen das erste zwischen Rotor und Torsionswelle wirkt und das zweite zwischen (nichtrotierender) Gondel und Torsionswelle. Beide Systeme arbeiten im Wechselspiel. Eine gleichzeitige Aktivierung beider Bremssysteme ist nicht sinnvoll, da quasi der Rotor direkt über die Bremsen mechanisch arretiert würde, die Bremsen aber aus wirtschaftlichen Gründen dafür nicht ausreichend groß dimensioniert sind. Ist das erste Bremssystem aktiviert, ist der Blattwinkel unabhängig von der Rotorposition oder Drehzahl konstant. Ist das zweite System aktiv (und das erste gelöst) verändert sich der Rotorblattwinkel abhängig von der Drehbewegung des Rotors. Der bei dem bekannten Blattverstellsystem vorgesehene Antriebsmotor kann wahlweise zwischen Gondel und Torsionswelle und Rotor und Torsionswelle wirken und dient der Regelung der Blattverstellung bzw. des Blattwinkels über einen geeigneten Regelkreis. Er ist zur Realisierung der Stabilisierungsanordnung einer erfindungsgemäßen Windkraftanlage und auch zum Bremsen des Rotors jedoch nicht erforderlich, wenn die Brems- oder Arretiervorrichtungen so gesteuert oder geregelt werden können, daß sie die Ausrichtung des Rotors in der gewünschten Parkposition (und ggf. auch die Bremsung mit definierter Verstellrate) gestatten. Ist ein Antriebsmotor vorgesehen, ermöglicht dieser zum einen die Regelung der Blattverstellung im Betrieb, zum anderen können die beiden Bremsvorrichtungen sehr einfach (insbesondere ungeregelt) ausgeführt werden, weil die Regelvorgänge über einen Motor gefahren werden können.

Bei einer weiteren vorteilhaften Ausführungsform der Erfindung ist vorgesehen, daß die Kopplungseinrichtung ein schaltbares Getriebe, vorzugsweise ein Planetengetriebe zum Anpassen der bei einer Rotorbewegung bewirkten Verstellung des mindestens einen Rotorblattes an den Betriebszustand der Windkraftanlage aufweist. Bei dieser Ausführungsform kann auf die Bereitstellung von Bremssystemen und Antriebsmotoren für die Torsionswelle verzichtet werden. Das schaltbare Getriebe, wie etwa das Planetengetriebe der Kopplungseinrichtung dieser Ausführungsform der Erfindung weist (vergleichbar einer Dreigang-Nabenschaltung beim Fahrrad) drei Schaltpositionen auf. Die erste Position schafft eine starre Verbindung zwischen Rotor und Torsionswelle und hält damit den Blattwinkel konstant (Betriebsposition), die zweite Position übersetzt die Rotorposition mit einer kleinen Übersetzung in einen Blattwinkel (Bremsposition), die dritte Position übersetzt die Rotorposition mit hoher Übersetzung in einen Blattwinkel (Parkpositionsregelung). Ein derartiges Planetengetriebe wird bei erfindungsgemäßen Windkraftanlage mit Getriebe zwischen dem Rotor und dem Generator vorzugsweise derart ausgeführt, daß das Hohlrad fest mit dem Getriebegehäuse verbunden ist und die beiden Übersetzungen durch wechselseitiges Verschalten von Sonnenrad und Planeten mit Rotor und Torsionswelle realisiert werden (Analog-Dreigangnabe). Eine Ölversorgung des Schaltgetriebes durch das ohnehin vorhandene Schmiersystem des Hauptgetriebes ist in diesem Fall besonders einfach. Die Einstellung der lastarmen Parkposition kann durch drei Strategien erfolgen:

a) Das Getriebe wird so konstruiert, daß es unter Last beliebig geschaltet werden kann. Dann erfolgt die Umschaltung von Position 2 (siehe oben) zu Position 3 derart, daß sich die für die gewünschte lastarme Parkposition erforderliche Kopplung von Blattwinkel und Rotorposition ergibt. Falls erforderlich (insbesondere bei wenig Wind zur Aufrechterhaltung der Drehbewegung des Rotors) kann auch zwischendurch die Schaltposition 1 zeitlich begrenzt angefahren werden.

b) Durch Schalten des Getriebes in Position 2 wird der Blattwinkel in die Fahnenposition gefahren und dort bei trudelndem Rotor konstant gehalten (Position 1). Bei Erreichen der gewünschten Rotorposition wird der Rotor kurzfristig über eine im Stand der Technik übliche Rotorbremse (Feststellbremse z.B. für Wartungsarbeiten) festgehalten. Das Schaltgetriebe wird in die Position 3 umgeschaltet und die Rotorbremse wird wieder freigegeben, so daß die erfindungsgemäße Positionsregelung aktiviert ist.

c) Durch Schalten des Getriebes in Position 2 wird der Blattwinkel in die Fahnenposition gefahren. Die Positionsregelung wird sodann durch Schalten in Position 3 aktiviert. Über ein zusätzliches (redundantes) Blattverstellsystem wird der Blattwinkel so verändert, daß sich die gewünschte Kopplung von Rotorposition und Blattwinkel ergibt.

Selbstverständlich ist das Prinzip der Positionsregelung auch mit anders gearteten Verstellmitteln als den beschriebenen elektromechanischen oder rein mechanischen Komponenten realisierbar. Insbesondere auch hydraulische Lösungen sind problemlos realisierbar. Allen Systemen gemeinsam ist jedoch die erfindungsgemäße unmittelbare regelungstechnische Verknüpfung der Rotorposition mit der Blattverstelleinrichtung. Im Rahmen der Erfindung hat es sich als besonders zweckmäßig erwiesen, wenn die Kopplungseinrichtung mindestens eine Rutschkupplung aufweist, über die die Verstellung des mindestens einen Rotorblattes bewirkt wird, weil auf diese Weise eine Beschädigung des Systems bei blockiertem Rotorblatt verhindert wird, bzw. eine Verstellung nicht blockierter Rotorblätter bei Blockieren nur eines Rotorblattes weiter erfolgen kann.

Die Betriebszuverlässigkeit einer erfindungsgemäßen Windkraftanlage kann erhöht werden, wenn die Verstelleinrichtung mindestens zwei voneinander unabhängige Verstellsysteme aufweist, von denen jedes auch bei einem Ausfall des jeweils anderen Verstellsystems zur Verstellung des mindestens einen Rotorblattes betreibbar ist. Der für diese vollständige Redundanz erforderliche Mehraufwand wird insbesondere bei Windkraftanlagen im Multimegawattbereich durch eine deutliche Absenkung der dimensionierenden Extremlasten mehr als ausgeglichen. Zweckmäßigerweise wird für jedes Rotorblatt des Rotors einer erfindungsgemäßen Windkraftanlage eine Verstelleinrichtung mit mindestens zwei voneinander unabhängigen Verstellsystemen vorgesehen. Diese Verstellsysteme können je eine zwischen der Rotornabe und dem Rotorblatt angeordnete von einem Antrieb verstellbare Drehverbindung aufweisen, wobei die beiden Drehverbindungen in einem axialen Abstand zueinander und im wesentlichen zueinander konzentrisch angeordnet sein können. Als vorteilhaft hat es sich erwiesen, wenn eine der beiden Drehverbindungen so wie deren Antrieb an der Rotornabe und die andere Drehverbindung sowie deren Antrieb außerhalb der Rotornabe angeordnet ist. Vorteilhafterweise ist die außerhalb der Rotornabe angeordnete Drehverbindung sowie deren Antrieb an einem sich zwischen den beiden Drehverbindungen axial erstreckenden rohrförmigen Bauteil angeordnet, welches vorzugsweise ein besonders bevorzugt im Wickelverfahren hergestelltes Faserverbundbauteil ist.

Eine der beiden Drehverbindungen sowie deren Antrieb kann an der Rotornabe und die andere Drehverbindung sowie deren Antrieb unmittelbar am Rotorblatt angeordnet sein. Dabei ist der Antrieb der am Rotorblatt angeordneten Drehverbindung zweckmäßigerweise im wesentlichen innerhalb des Rotorblattes angeordnet. Bei einer anderen Ausführungsform ist der Antrieb der am Rotorblatt angeordneten Drehverbindung im wesentlichen außerhalb des Rotorblattes angeordnet. Bei einer besonders bevorzugten Ausführungsform sind beide Verstellsysteme gleichzeitig betätigbar, wobei die aus dem Betrieb der beiden Verstellsysteme resultierende azimutale Verstellrate veränderlich steuerbar ist, insbesondere zeitabhängig und/oder rotorblattwinkelabhängig und/oder verstellwegabhängig.

Zweckmäßigerweise ist die Verstellrate des einen Verstellsystems in Abhängigkeit vom Verstellweg des anderen Verstellsystems gesteuert. Mindestens eines der Verstellsysteme kann als elektrisches System verwirklicht werden. Im Rahmen der Erfindung ist auch an die Bereitstellung einer Überwachungseinrichtung gedacht, durch die ansprechend auf einen Ausfall eines der beiden Verstellsysteme die Verstellrate des jeweils anderen Verstellsystems zumindest zeitweise erhöht wird. Dabei kann die Verstellrate durch stufenweises Zu- bzw. Abschalten von den Antrieb speisenden Akkuzellen verändert werden. Bei einer anderen Ausführungsform der Erfindung wird die Verstellrate durch stufenweises Umschalten einer Statorwicklung des Antriebs verändert. Dabei kann der Antrieb des einen Verstellsystems einen Reihenschlußmotor und der Antrieb des anderen Verstellsystems einen Nebenschlußmotor aufweisen. Bei einer anderen Ausführungsform ist der Antrieb des einen Verstellsystems in Form eines Drehstrommotors gebildet, während der Antrieb des anderen Verstellsystems in Form eines Gleichstrommotors gebildet ist. Zur Veränderung der Blattneigung bezüglich einer Radialebene des Rotors können die Drehachsen der beiden Drehverbindungen gegeneinander geneigt sein. Als besonders zweckmäßig hat es sich erwiesen, wenn die beiden Drehverbindungen durch ein einziges Großwälzlager mit drei Ringen und zwei Laufbahnen gebildet sind.

Im Rahmen der Erfindung ist auch an die Bereitstellung einer Stabilisierungsanordnung einer erfindungsgemäßen Windkraftanlage als Aufrüstprodukt für bereits installierte Windkraftanlagen gedacht. Diese Stabilisierungsanordnung zeichnet sich im wesentlichen durch eine an die Verstelleinrichtung koppelbare Kopplungs- insbesondere Regeleinrichtung aus, mit der bei einer Drehbewegung des Rotors aus der vorgegebenen Drehstellung eine Verstellung des mindestens einen Rotorblattes zur Erzeugung eines dieser Drehbewegung entgegenwirkenden Drehmomentes veranlaßt werden kann.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:

Fig. 1    eine schematische Darstellung einer ersten Ausführungsform der Erfindung,

Fig. 2    eine schematische Darstellung einer zweiten Ausführungsform der Erfindung,

Fig. 3    eine schematische Abbildung einer dritten Ausführungsform der Erfindung und

Fig. 4    eine schematische Darstellung einer vierten Ausführungsform der Erfindung.

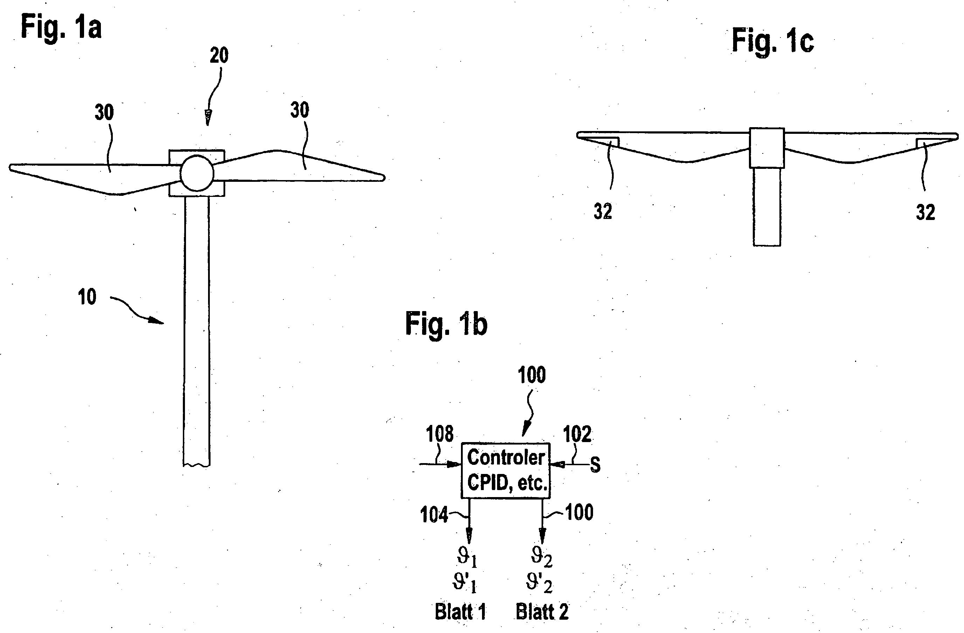

Die in Fig. 1 dargestellte Ausführungsform der Erfindung besteht im wesentlichen aus einem Turm 10 und einem Rotor 20 mit zwei sich senkrecht zur Rotorachse in einander entgegengesetzten Richtungen erstreckenden Rotorblättern 30. In Fig. 1a ist der Rotor in eine lastarmen Parkposition dargestellt, in der die Rotorblätter 30 horizontal ausgerichtet sind. Gemäß Fig. 1b ist die in Fig. 1 dargestellte Windkraftanlage mit einer Regeleinrichtung 100 ausgestattet, der über einen Eingang 102 ein die Drehstellung des Rotors darstellendes Signal S eingegeben werden kann. Weiter können der Regeleinrichtung 100 über Eingänge 108 Sollwerte für die Rotordrehstellung eingegeben werden. Mit Hilfe der Regeleinrichtung 100 wird aus der Abweichung zwischen dem vom Signal S dargestellten Istwert der Drehstellung des Rotors und dem über dem Eingang 108 eingegebenen Sollwert Sollwerte für die Rotorblattverstellung $\vartheta_1$ und $\vartheta_2$ sowie ggf. Verstellgeschwindigkeiten $\vartheta'_1$ und $\vartheta'_2$ errechnet. Diese Sollwerte für die Blattverstellung werden dann mit einer geeigneten Blattverstellungseinrichtung eingestellt, wobei ggf. die ebenfalls errechnete Verstellgeschwindigkeit benutzt wird. Die Blattverstellung kann bei der in Fig. 1 dargestellten Ausführungsform der Erfindung durch Drehen der Rotorblätter 30 um parallel zu deren Längsachsen verlaufende Drehachsen erfolgen. Durch diese Drehung der Rotorblätter 30 wird ein bezüglich der Rotorachse wirkendes Drehmoment erzeugt, welches zu einer Reduzierung der Abweichung zwischen dem Istwert der Rotordrehstellung und dem Sollwert führt.

Gemäß Fig. 1c können die Rotorblätter an ihren der Rotorachse abgewandten Enden mit aerodynamischen Hilfseinrichtungen 32 ausgestattet werden, welche zur Verstellung des Rotors bzw. zur Herbeiführung des gewünschten Drehmomentes verstellt werden.

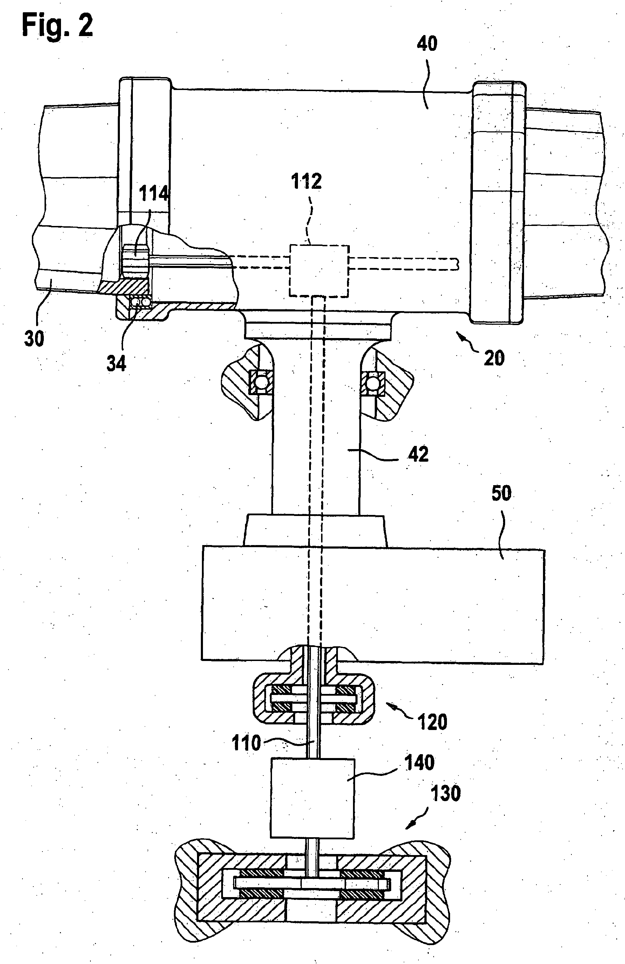

Bei der in Fig. 2 dargestellten Ausführungsform der Erfindung ist ein Rotorblatt 30 über eine als Großwälzlager 34 ausgeführte Drehverbindung mit einer Nabe 40 des Rotors verbunden. Die Nabe 40 ist über eine Hauptwelle 42 mit einem Getriebe 50 der Windkraftanlage verbunden. Die Verstellung des Rotorblatts 30 erfolgt bei der in Fig. 2 dargestellten Ausführungsform der Erfindung über eine Torsionswelle 110, ein Winkelgetriebe 112 und ein über das Winkelgetriebe 112 von der Torsionswelle 110 antreibbares Verstellritzel 114, welches mit einer Verzahnung am Innenring des Großwälzlagers 34 kämmt. Die Torsionswelle 110 durchsetzt die als Hohlwelle ausgeführte Hauptwelle 42 und das Getriebe 50. Der Torsionswelle 110 ist ein erstes zwischen dem Rotor 20 und der Torsionswelle 110 wirkendes Bremssystem 120 sowie ein zweites zwischen der Torsionswelle 110 und der nichtrotierenden Gondel der Windkraftanlage wirkendes Bremssystem 130 zugeordnet. Ferner ist der Torsionswelle 110 ein Antriebsmotor 140 zugeordnet, welcher eine Drehbewegung der Torsionswelle 110 um deren Längsachse bewirken kann. Dabei kann sich der Antriebsmotor 140 wahlweise am Rotor oder an der feststehenden Gondel abstützen. Eine Verstellung des Rotorblattes 30 kann bei dieser Ausführungsform der Erfindung bei freigesetztem Bremssystem 120 durch Anziehen des Bremssystems 130 bzw. durch stärkere Auslegung des Bremssystems 130 im Vergleich zum Bremssystem 120 bewirkt werden. In diesem Fall führt eine Relativbewegung des Rotors zur Torsionswelle 110 zu einer Verdrehung des Verstellritzels 114 welche ihrerseits zu einer Verstellung des Rotorblattes 30 führt. Durch eine geregelte Ansteuerung der Bremssysteme 120 und 130 kann die Verstellrate des Rotorblattes dem Betriebszustand angepaßt werden. Zusätzlich oder alternativ kann die Verstellung des Rotorblattes 30 auch mit Hilfe des Antriebsmotors 114 ausgeführt werden.

Bei der in Fig. 2 dargestellten Ausführungsform der Erfindung verläuft die Torsionswelle 110 koaxial zur Hauptwelle 42 der Windkraftanlage.

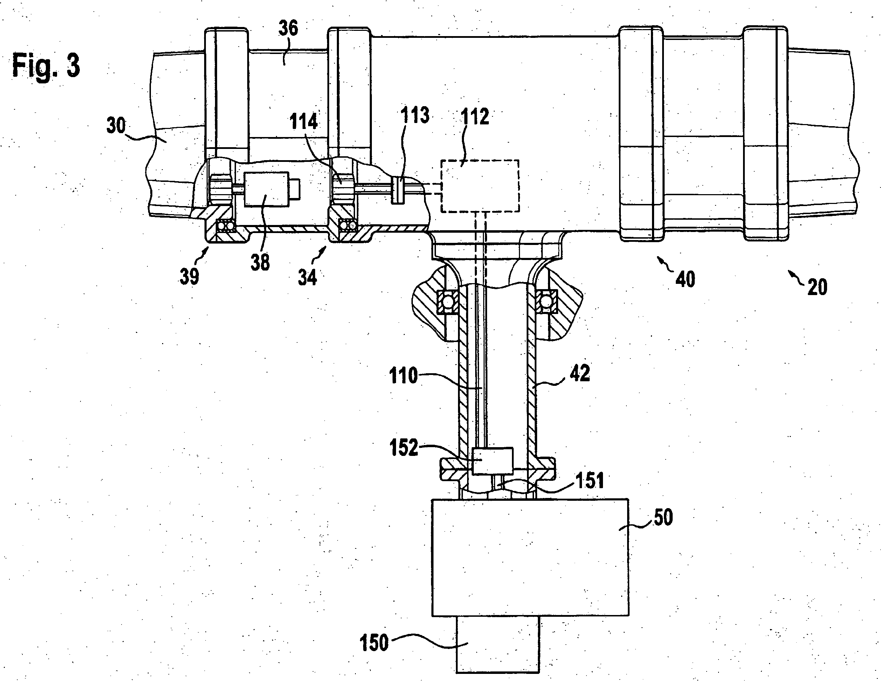

Bei der in Fig. 3 dargestellten Ausführungsform der Erfindung kann eine Drehbewegung des Rotors 20 über ein schaltbares Planetengetriebe 150, eine Zwischenwelle 151, ein Zwischengetriebe 152 und eine Torsionswelle 110 auf ein Winkelgetriebe 112 übertragen werden, welches ein Ritzel 114 treibt. Das Ritzel 114 kämmt mit einer Innenverzahnung eines Drehlagers 34. Über dieses Drehlager 34 ist ein rohrförmiges Verbindungsstück an der Rotornabe 40 befestigt. An seinem der Nabe 40 abgewandten Ende ist das rohrförmige Verbindungsstück 36 über ein weiteres Drehlager 39 mit dem Rotorblatt 30 verbunden. Bei der in Fig. 3 dargestellten Ausführungsform der Erfindung kann eine Verstellung des Rotorblattes 30 sowohl durch eine Drehung des Verstellritzels 34 als auch durch einen auf das weitere Drehlager 39 wirkenden Verstellmotor 38 bewirkt werden. Durch eine derartige Redundanz wird die Betriebssicherheit der Windkraftanlage erhöht. Bei der in Fig. 3 dargestellten Ausführungsform der Erfindung ist das Winkelgetriebe 112 über eine Rutschkupplung 113 mit dem Verstellritzel 114 verbunden. Dadurch kann eine Beschädigung der Windkraftanlage bei blockiertem Rotorblatt 30 verhindert werden. Ferner kann dadurch erreicht werden, daß bei Blockieren eines Rotorblattes 30 die übrigen Rotorblätter der Windkraftanlage noch über das Winkelgetriebe 112 verstellt werden können. Bei der in Fig. 3 dargestellten Ausführungsform der Erfindung ist die Torsionswelle 110 exzentrisch bezüglich der Rotorachse angeordnet.

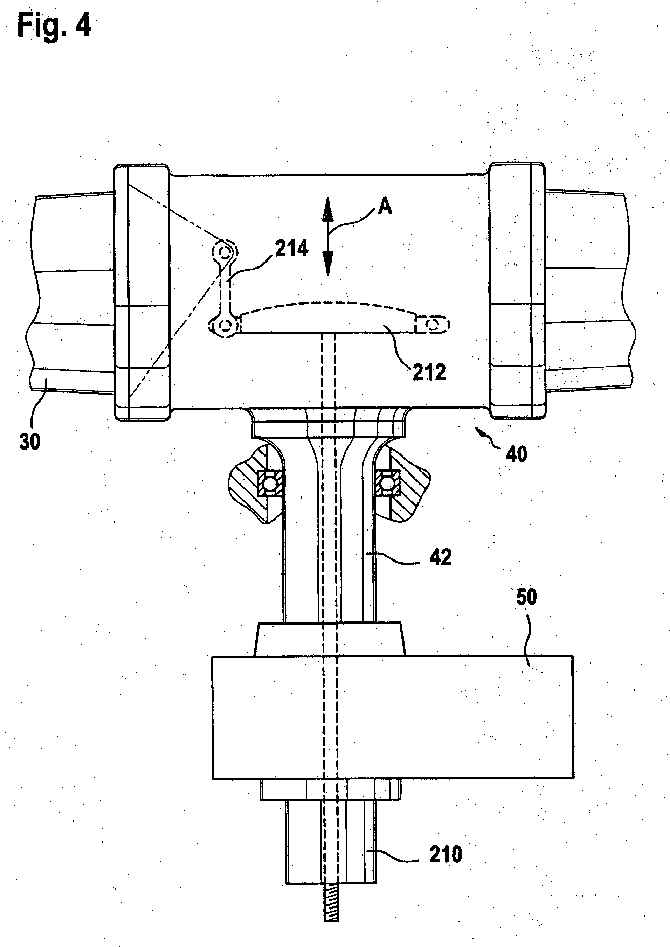

Bei der in Fig. 4 dargestellten Ausführungsform der Erfindung ist anstelle der Torsionswelle 110 eine die Rotorwelle 42 und das Getriebe 50 durchsetzende Schubstange 200 vorgesehen. Diese Schubstange 200 kann bei einer Drehung des Rotors in den durch den Doppelpfeil A bezeichneten Richtung parallel zur Rotorachse verschoben werden. Dazu ist das der Nabe 40 abgewandte Ende der Schubstange 200 in Form einer Gewindespindel gebildet, welche in einer entsprechenden Spindelmutter 210 aufgenommen ist. Die Bewegung der Schubstange 200 wird über eine in der Nabe aufgenommene Traverse 212 und eine Koppelstange 214 auf das Rotorblatt 30 übertragen und kann beispielsweise in eine Drehung dieses Rotorblattes 30 umgesetzt werden. Die Spindelmutter 210 ist lösbar am Getriebegehäuse 50 befestigt, um so eine Entkopplung der Rotorblattverstellung von der Rotordrehung zu ermöglichen.

Die Erfindung ist nicht auf die anhand der Zeichnung erläuterten Ausführungsbeispiele beschränkt. Beispielsweise ist auch an die Verwirklichung von Windkraftanlagen mit Rotorblättern gedacht, bei denen die Verstellung über aerodynamische Hilfseinrichtungen, wie etwa Wölbklappen oder Störklappen, Spoiler und/oder Tips erfolgt. Ferner kann eine erfindungsgemäße Windkraftanlage auch noch eine eigene Engergieversorgungseinrichtung, beispielsweise in Form einer Hilfs-Windkraftanlage aufweisen. Auch ist die Erfindung nicht nur bei Zweiblattrotoren sondern auch bei Einblattrotoren oder Rotoren mit mehr als zwei Rotorblättern einsetzbar.

## Patentansprüche

1.  Windkraftanlage, mit einem um eine etwa horizontal verlaufende Rotorachse drehbaren und mindestens einen sich quer, etwa senkrecht zur Rotorachse erstreckenden Rotorblatt (30) aufweisenden Rotor (20), einer Verstelleinrichtung zum Verstellen des mindestens einen Rotorblattes, wobei durch das Verstellen das bei Windlast bezüglich der Rotorachse erzeugte Drehmoment veränderbar ist, und einer Stabilisierungsanordnung, mit der der Rotor (20) in mindestens einer vorgegebenen, lastarmen Drehstellung bezüglich der Rotorachse stabilisierbar ist, **dadurch gekennzeichnet, daß** die Stabilisierungsanordnung eine an die Verstelleinrichtung koppelbare Kopplungseinrichtung aufweist, mit der bei einer Abweichung von der vorgegebenen Drehstellung oder bei einer Drehbewegung des Rotors (20) aus der vorgegebenen Drehstellung eine Verstellung des mindestens einen Rotorblattes (30) zur Erzeugung eines dieser Abweichung bzw. Drehbewegung entgegenwirkenden Drehmomentes veranlaßt werden kann.

2.  Windkraftanlage nach Anspruch 1, **dadurch gekennzeichnet, daß** das mindestens eine Rotorblatt (3) mit der Verstelleinrichtung zumindest teilweise um eine quer zur Rotorachse und vorzugsweise parallel zur Längsachse dieses Rotorblattes verlaufende Drehachse verdrehbar ist.

3.  Windkraftanlage nach Anspruch 1 oder 2, **dadurch gekennzeichnet, daß** dem mindestens einen Rotorblatt (30) mindestens eine aerodynamische Hilfseinrichtung (32) wie etwa eine Wölbklappe, eine Störklappe, ein Spoiler und/oder eine drehbare Blattspitze zugeordnet ist, die mit der Verstelleinrichtung verstellbar ist.

4.  Windkraftanlage nach einem der vorhergehenden Ansprüche, **dadurch gekennzeichnet, daß** der Rotor (20) ein oder zwei Rotorblätter (30) aufweist und in einer Drehstellung stabilisierbar ist, in der das Rotorblatt (30) bzw. die Rotorblätter (30) etwa horizontal ausgerichtet ist (sind).

5.  Windkraftanlage nach einem der vorhergehenden Ansprüche, **dadurch gekennzeichnet, daß** eine Drehbewegung des Rotors (20) durch eine Verstellung des mindestens einen Rotorblattes (30) unter Einsatz der Kopplungseinrichtung abbremsbar ist.

6.  Windkraftanlage nach einem der vorhergehenden Ansprüche, **dadurch gekennzeichnet, daß** die Regeleinrichtung einen zum Erfassen der Drehstellung des Rotors geeigneten Sensor sowie eine Signalverarbeitungsanordnung (100) aufweist, mit der auf Grundlage von die Drehstellung des Rotors (20) darstellenden Sensorsignalen über einen Regelalgorithmus ein Sollwert ($\vartheta_1$, $\vartheta_2$) für die Blattverstellung, wie etwa ein in Bezug auf die Längsachse azimutaler Verstellwinkel errechnet wird, der von der Verstelleinrichtung eingestellt wird.

7.  Windkraftanlage nach einem der vorhergehenden Ansprüche, **dadurch gekennzeichnet, daß** die Regeleinrichtung einen PI-Regler, PID-Regler, einen adaptiven Regler und/oder einen Fuzzy-Regler aufweist.

8.  Windkraftanlage nach einem der vorhergehenden Ansprüche, **dadurch gekennzeichnet, daß** mindestens ein Regelalgorithmus der Regeleinrichtung und/oder dessen Verstärkung(en) in Abhängigkeit von der beispielsweise mittels Windfahnensignalen ermittelten Windrichtung veränderbar ist.

9.  Windkraftanlage nach einem der vorhergehenden Ansprüche, **gekennzeichnet durch** eine eigene Energieversorgungseinrichtung.

10. Windkraftanlage nach Anspruch 9, **dadurch gekennzeichnet, daß** die Energieversorgungseinrichtung mindestens einen Akkumulator, Kondensator und/oder ein Notstromaggregat, insbesondere Dieselaggregat aufweist.

11. Windkraftanlage nach Anspruch 9 oder 10, **dadurch gekennzeichnet, daß** die Energieversorgungseinrichtung eine vorzugsweise an einer Maschinengondel der Windkraftanlage montierte kleine Hilfs-Windkraftanlage aufweist.

12. Windkraftanlage nach Anspruch 11, **dadurch gekennzeichnet, daß** die Hilfs-Windkraftanlage ein System im Leistungsbereich zwischen 5 und 100 kW ist, vorzugsweise mit einer Nennwindgeschwindigkeit oberhalb von 25 m/s.

13. Windkraftanlage nach Anspruch 11 oder 12, **dadurch gekennzeichnet, daß** die mindestens eine Hilfs-Windkraftanlage eine Vertikalachsmaschine ist, deren Maschinensatz innerhalb einer Maschinengondel der Windkraftanlage angeordnet ist.

14. Windkraftanlage nach einem der Ansprüche 11 bis 13, **gekennzeichnet durch** einen von der Hilfs-Windkraftanlage gespeisten Pufferakku, aus dem die Verstelleinrichtung, die Regeleinrichtung und/oder ggf. Hilfsaggregate der Windkraftanlage gespeist werden können.

15. Windkraftanlage nach einem der vorhergehenden Ansprüche, **dadurch gekennzeichnet, daß** die Kopplungseinrichtung mindestens ein Kopplungssystem aufweist, mit dem über eine lösbare, direkte mechanische Kopplung bei einer Drehbewegung des Rotors eine Verstellung des mindestens einen, vorzugsweise jedes Rotorblattes bewirkt wird.

16. Windkraftanlage nach Anspruch 15, **dadurch gekennzeichnet, daß** das Kopplungssystem eine vorzugsweise zumindest abschnittweise etwa parallel zur Rotorachse verlaufende Torsionswelle (110) und/oder Schubstange (200) aufweist, die innerhalb einer hohlgebohrten Hauptwelle (42) und/oder einer Rotorlagerung verläuft, und auf vorzugsweise innerhalb der Rotornabe (40) angeordnete Verstellmittel (112, 114, 212, 214) wirkt, mit denen bei einer Drehbewegung des Rotors (20) eine Verstellung des mindestens einen Rotorblattes (30) bewirkt wird.

17. Windkräftanlage nach Anspruch 16, **dadurch gekennzeichnet, daß** die Verstellung bei Auftreten einer Relativbewegung zwischen Rotor (20) und Torsionswelle (110) bewirkt wird.

18. Windkraftanlage nach Anspruch 16 oder 17, **dadurch gekennzeichnet, daß** der Torsionswelle (110) ein erstes zwischen der Torsionswelle (110) und dem Rotor (20) wirkendes Brems- oder Arretiersystem (120) und ein zweites zwischen der Torsionswelle (110) und einer nichtrotierenden Gondel der Windkraftanlage wirkendes Brems- oder Arretiersystem (130) zugeordnet ist.

19. Windkraftanlage nach einem der Ansprüche 16 bis 18, **dadurch gekennzeichnet, daß** der Torsionswelle (110) eine Antriebseinrichtung (140) zugeordnet ist.

20. Windkraftanlage nach einem der Ansprüche 16 bis 19, **dadurch gekennzeichnet, daß** die Torsionswelle (110) zumindest abschnittweise mit Abstand von der Rotorachse verläuft.

21. Windkraftanlage nach einem der vorhergehenden Ansprüche; **dadurch gekennzeichnet, daß** die Kopplungseinrichtung ein schaltbares Getriebe, vorzugsweise ein Planetengetriebe (150) zum Anpassen der bei einer Rotorbewegung bewirkten Verstellung des mindestens einen Rotorblattes an den Betriebszustand der Windkraftanlage aufweist.

22. Windkraftanlage nach einem der vorhergehenden Ansprüche, **gekennzeichnet durch** ein Regelsystem zum Anpassen der Verstellrate des mindestens einen Rotorblattes beim Abbremsen an den jeweiligen Betriebszustand.

23. Windkraftanlage nach einem der Ansprüche 16 bis 22, **dadurch gekennzeichnet, daß** das Regelsystem zum Verändern des Bremsmomentes einer an die Torsionswelle gekoppelten Bremsvorrichtung betreibbar ist.

24. Windkraftanlage nach einem der vorhergehenden Ansprüche, **dadurch gekennzeichnet, daß** die Kopplungseinrichtung mindestens eine Rutschkupplung (113) aufweist, über die die Verstellung des mindestens einen Rotorblattes (30) bewirkt wird.

**25.** Windkraftanlage nach einem der vorhergehenden Ansprüche, **dadurch gekennzeichnet, daß** die Verstelleinrichtung mindestens zwei voneinander unabhängige Verstellsysteme (30, 39) aufweist, von denen jedes auch bei einem Ausfall des jeweils anderen Verstellsystems zur Verstellung des mindestens einen Rotorblattes (30) betreibbar ist.

**26.** Stabilisierungsanordnung für eine Windkraftanlage nach einem der vorhergehenden Ansprüche.

**Claims**

**1.** Wind turbine comprising

- a rotor (20), wherein the rotor is rotatable around an approximately horizontally arranged rotor axis and comprisesat least one rotor blade (30) extending crosswise, approximately perpendiculartothe rotor axis,
- an adjustment device for adjusting the at least one rotor blade, wherein the torque being caused by the wind load with respect to the rotor axis is adjustable by the adjustment, and
- a stabilization arrangement, by which the rotor (20) can be stabilized with respect to the rotor axis in at least one defined rotational position having a low load,

**characterized in that** the stabilization arrangement comprises a couplingdevice which can be coupled to the adjustment device, by which,

in case of a deviation from the defined rotational position or in case of a rotational motion of the rotor (20) away from the defined rotational position,

an adjustment of the at least one rotor blade (30) can be induced forgeneratinga torque counteracting the deviation, respectively the rotational motion.

**2.** Wind turbine according to claim 1, characterized inthat the at least one rotor blade (3) is adjustable by the adjustment device at least partiallyaround a rotational axis running perpendicularto the rotor axis and preferably in parallel to a longitudinal axis of said rotor blade.

**3.** Wind turbine according to claim 1 or 2, **characterized in that** an aerodynamic auxiliary device (32), like a bulging flap, a distortion flap, a spoiler and/or a rotatable rotor blade tip adjustable by the adjustment device, isassignedto the at leastone rotor blade (30).

**4.** Wind turbine according to one of the preceding claims, **characterized in that** the rotor (20) comprises one or two rotor blades (30), and wherein the rotor blade (30) can be stabilized in a rotational position, in which the rotor blade (30), respectively the rotor blades (30) is/are arranged in an approximately horizontal position.

**5.** Wind turbine according to one of the preceding claims, **characterized in that** the rotational movement of the rotor (20) can be decelerated by an adjustment of the at least one rotor blade (30) by using the couplingdevice.

**6.** Wind turbine according to one of the preceding claims, **characterized in that** the control device has a sensor and a signal processingarrangement (100) suitable for detecting the rotational position of the rotor, wherein a set point $(\vartheta_1, \vartheta_2)$, like a azimuthal adjustment angle regarding the longitudinal axis for the blade adjustment, is calculated based on the sensor signals representing the rotational position of the rotor (20) and usinga control algorithm, wherein the set point is set by the adjustment device.

**7.** Wind turbine according to one of the preceding claims, **characterized in that** the control device comprisesa PI controller, a PID controller, and adaptive controller and/or a fuzzy controller.

**8.** Wind turbine according to one of the preceding claims, **characterized in that** at least one control algorithm of the control device and/or its amplification(s) can be changed dependingofthe di rection of the wi nd, which for example can be detected with the help of signals from a wind vane.

**9.** Wind turbine according to one of the preceding clai ms, **characterized by** an own energy supply device.

**10.** Wind turbine according to claim 9, characterized inthat the energy supply device comprises at least one chargeable battery, a capacitor and/or an energy backup generator, in particular a diesel generator.

11. Wind turbine according to claim 9 or 10, **characterized in that** the energy supply device comprises small auxiliary wind power plant, which is preferably mounted to the nacelle.

12. Wind turbine according to claim 11, **characterized in that** the auxiliary wind power plant is a system having a powerrange between the 5 to 100 kW, preferred having a rated wind speed above 25 m/s.

13. Wind turbine according to claim 11 or 12, **characterized in that** the at least one auxiliary wind power plant is a vertical axis machine, wherein the machine unit of the auxiliary wind power plant is arranged within the nacelle of the wind turbine.

14. Wind turbine according to claim 11 to 13, **characterized by** a buffering batteryfed by the auxiliary wind power plant, wherein the adjustment device, the control device and/orpossibleauxiliaryunitsofthe wind turbine can be fed from the buffering battery.

15. Wind turbine according to one of the preceding claims, **characterized in that** the coupling device comprisesat least one coupling system, by which in case of a rotational motion of the rotor an adjustment of at least one rotor blade, preferred of all rotor blades, is affected via a detachable, directly mechanical coupling.

16. Wind turbine according to claim 15, **characterized in that** the couplingsystem comprises a torsional shaft (110) and/or a connecting rod (200), which is/are preferablyarranged at least partiallyapproximately in parallel to the rotor axis, and which is/are arranged within a hollow-drilled main shaft (42) and/or a rotor support, and which affect/s adjustment means (112, 114, 212, 214) preferably arranged within the rotor hub (40), wherein the adjustment means (112, 114, 212, 214) cause an adjustment of the at least one rotor blade (30) in case of a rotational motion of the rotor (20).

17. Wind turbine according to claim 16, **characterized in that** the adjustment is executed in case of a presence of a relative motion between the rotor (20) and the torsional shaft (110).

18. Wind turbine according to claim 16 or 17, **characterized in that** a first system for breaking and blocking(130) beingeffective between the torsional shaft (110) and the rotor (20) and a second system for breakingor blocking (130) being effective between the torsional shaft (110) and the non-rotating nacelle of the wind turbine are assigned to the torsional shaft (110).

19. Wind turbine according to one of the claims 16 to 18, **characterized in that** the drive device (140) is assigned to the torsional shaft (110).

20. Wind turbine according to one of the claims 16 to 19, **characterized in that** the torsional shaft (110) isarranged at least partially with a distance with regard to the rotor axis.

21. Wind turbine according to one of the preceding claims, **characterized in that** the coupling device comprises a switchable gearbox, preferably a planetary gearbox (150), for adapting the adjustment, caused during the rotational motion, of the at least one rotor blade with regard to the operational status of the windturbine.

22. Wind turbine according to one of the preceding claims, **characterized by** a control system for adapting the adjustment rate of the at least one rotor blade during deceleration to the specific operational status.

23. Wind turbine according to one of the claims 16 to 22, **characterized in that** the control system can be operated for adjusting the deceleratingtorque of a braking device being coupled to the torsional shaft.

24. Wind turbine according to one of the preceding claims, **characterized in that** the coupling device comprisesat least one friction clutch (130), by which the adjustment of the at least one rotor blade (30) can be affected.

25. Wind turbine according to one of the preceding clai ms, **characterized in that** the adjustment device comprises at least two adjustment systems (30, 39) being independent from each other, wherein each is operational in case of a failure of the otheradjustmentsystemfor adjusting the at least one rotor blade (30).

**26.** Stabilizingdevicefora wind turbine according to one of the preceding claims.

**Revendications**

**1.** Eolienne avec un rotor (20) pouvant tourner autour d'un axe de rotation s'étendant à peu près horizontalement et présentant au moins une pale de rotor (30) s'étendant transversalement, à peu près perpendiculairement à l'axe de rotor, un dispositif de réglage pour le réglage de l'au moins une pale de rotor, dans laquelle, grâce au réglage, le couple généré par rapport à l'axe de rotor en cas de charge due au vent est variable, et avec un dispositif de stabilisation avec lequel le rotor (20) peut être stabilisé dans au moins une position de rotation à faible charge prescrite par rapport à l'axe de rotor,
**caractérisée en ce que** le dispositif de stabilisation présente un dispositif de couplage pouvant être accouplé au dispositif de réglage, avec lequel, en cas d'une déviation par rapport à la position de rotation prescrite ou en cas de mouvement de rotation du rotor (20) hors de la position de rotation prescrite, il est possible de procéder à un réglage de l'au moins une pale de rotor (30) pour la génération d'un couple contrecarrant cette déviation ou ce mouvement de rotation.

**2.** Eolienne selon la revendication 1, **caractérisée en ce que** l'au moins une pale de rotor (3) peut tourner avec le dispositif de réglage au moins en partie autour d'un axe de rotation s'étendant transversalement à l'axe de rotor et de préférence parallèlement à l'axe longitudinal de cette pale de rotor.

**3.** Eolienne selon la revendication 1 ou 2, **caractérisée en ce que** l'on associe à l'au moins une pale de rotor (30) au moins un dispositif auxiliaire aérodynamique (32) tel que par exemple un volet de courbure, un volet déporteur, un spoiler et/ou un bout de pale rotatif pouvant être réglé avec le dispositif de réglage.

**4.** Eolienne selon l'une des revendications précédentes, **caractérisée en ce que** le rotor (20) présente une ou deux pale (s) de rotor (30) est peut être stabilisé dans une position de rotation dans laquelle la pale de rotor (30) ou les pales de rotor (30) est (sont) orientée(s) à peu près horizontalement.

**5.** Eolienne selon l'une des revendications précédentes, **caractérisée en ce qu'**un mouvement de rotation du rotor (20) peut être freiné par un réglage de l'au moins une pale de rotor (30) en utilisant le dispositif de couplage.

**6.** Eolienne selon l'une des revendications précédentes, **caractérisée en ce que** le dispositif de régulation présente un capteur adapté pour la détection de la position de rotation du rotor ainsi qu'un dispositif de traitement de signaux (100) avec lequel on calcule, sur la base de signaux de capteur représentant la position de rotation du rotor (20), via un algorithme de régulation, une valeur de consigne ($\vartheta_1$, $\vartheta_2$) pour le réglage de pale, telle que par exemple un angle de réglage azimutal compte tenu de l'axe longitudinal, lequel est réglé par le dispositif de réglage.

**7.** Eolienne selon l'une des revendications précédentes, **caractérisée en ce que** le dispositif de régulation présente un régulateur PI, un régulateur PID, un régulateur adaptif et/ou un régulateur Fuzzy.

**8.** Eolienne selon l'une des revendications précédentes, **caractérisée en ce qu'**au moins un algorithme de régulation du dispositif de régulation et/ou une/des amplification(s) de celui-ci est variable en fonction de la direction du vent déterminée par exemple au moyen de signaux de girouette.

**9.** Eolienne selon l'une des revendications précédentes, **caractérisée par** un dispositif d'alimentation en énergie dédié.

**10.** Eolienne selon la revendication 9, **caractérisée en ce que** le dispositif d'alimentation en énergie présente au moins un accumulateur, un condensateur et/ou un groupe électrogène de secours, en particulier un générateur diesel.

**11.** Eolienne selon la revendication 9 ou 10, **caractérisée en ce que** le dispositif d'alimentation en énergie présente une petite éolienne de secours de préférence montée sur une nacelle de l'éolienne.

**12.** Eolienne selon la revendication 11, **caractérisée en ce que** l'éolienne de secours est un système dans la plage de performances comprise entre 5 et 100 kW, de préférence avec une vitesse nominale supérieure à 25 m/s.

**13.** Eolienne selon la revendication 11 ou 12, **caractérisée en ce que** l'au moins une éolienne de secours est une machine à axe vertical dont le groupe moteur est disposé à l'intérieur d'une nacelle de l'éolienne.

**14.** Eolienne selon l'une des revendications 11 à 13, **caractérisée par** un accumulateur tampon alimenté par l'éolienne de secours à partir duquel il est possible d'alimenter le dispositif de réglage, le dispositif de régulation et/ou le cas échéant des groupes auxiliaires de l'éolienne.

**15.** Eolienne selon l'une des revendications précédentes, **caractérisée en ce que** le dispositif de couplage présente au moins un système de couplage avec lequel on suscite, via un couplage mécanique direct libérable lors d'un mouvement de rotation du rotor, un réglage de l'au moins une pale de rotor, de préférence de chacune de celles-ci.

**16.** Eolienne selon la revendication 15, **caractérisée en ce que** le système de couplage présente un arbre de torsion (110) et/ou une tige de poussée (200) s'étendant de préférence au moins par tronçons approximativement parallèlement à l'axe de rotor, qui s'étend à l'intérieur d'un arbre principal (42) percé sur toute la longueur et/ou un logement de rotor et qui agit sur des moyens de réglage (112, 114, 212, 214) disposés de préférence à l'intérieur du moyeu de rotor (40) avec lesquels on suscite, lors d'un mouvement de rotation du rotor (20), un réglage de l'au moins une pale de rotor (30).

**17.** Eolienne selon la revendication 16, **caractérisée en ce que** le réglage est suscité à l'apparition d'un mouvement relatif entre le rotor (20) et l'arbre de torsion (110).

**18.** Eolienne selon la revendication 16 ou 17, **caractérisée en ce que** l'on associe à l'arbre de torsion (110) un premier système de freinage ou d'arrêt (120) agissant entre l'arbre de torsion (110) et le rotor (20), et un deuxième système de freinage ou d'arrêt (130) agissant entre l'arbre de torsion (110) et une nacelle non rotative de l'éolienne.

**19.** Eolienne selon l'une des revendications 16 à 18, **caractérisée en ce que** l'on associe un dispositif d'entraînement (140) à l'arbre de torsion (110).

**20.** Eolienne selon l'une des revendications 16 à 19, **caractérisée en ce que** l'arbre de torsion (110) s'étend au moins par tronçons à distance de l'axe de rotor.

**21.** Eolienne selon l'une des revendications précédentes, **caractérisée en ce que** le dispositif de couplage présente un engrenage commutable, de préférence un engrenage planétaire (150) pour adapter le réglage suscité lors d'un mouvement de rotor de l'au moins une pale de rotor à l'état de fonctionnement de l'éolienne.

**22.** Eolienne selon l'une des revendications précédentes, **caractérisée par** un système de régulation pour adapter le taux de réglage de l'au moins une pale de rotor lors du freinage à l'état de fonctionnement respectif.

**23.** Eolienne selon l'une des revendications 16 à 22, **caractérisée en ce que** le système de régulation peut être exploité pour modifier le moment de freinage d'un dispositif de freinage accouplé à l'arbre de torsion.

**24.** Eolienne selon l'une des revendications précédentes, **caractérisée en ce que** le dispositif de couplage présente au moins un accouplement à friction (113) via lequel on suscite le réglage de l'au moins une pale de rotor (30).

**25.** Eolienne selon l'une des revendications précédentes, **caractérisée en ce que** le dispositif de réglage présente au moins deux systèmes de réglage (30, 39) indépendants l'un de l'autre, chacune d'entre eux pouvant être exploité également en cas de défaillance de l'autre système de réglage respectif pour le réglage de l'au moins une pale de rotor (30).

**26.** Dispositif de stabilisation pour une éolienne selon l'une des revendications précédentes.

Fig. 1c

Fig. 1a

Fig. 1b

Controler CPID, etc.

Blatt 1    Blatt 2

# Fig. 2

Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0709571 A2